# EUROPEAN PATENT SPECIFICATION

(11) **EP 3 462 237 B1**
(45) Date of publication and mention of the grant of the patent: **24.06.2020**
(21) Application number: 18197235.7
(22) Date of filing: 27.09.2018
(51) Int. Cl.: G03B 15/03

(54) **CAMERA MODULE**
KAMERAMODUL
MODULE DE CAMÉRA

(30) Priority: 27.09.2017 JP 2017186244
(43) Date of publication of application: 03.04.2019
(73) Proprietor: AISIN SEIKI KABUSHIKI KAISHA, Kariya-shi, Aichi-ken 448-8650 (JP)
(72) Inventor: Kadomae, Kazuhito, Kariya-shi, Aichi-ken 448-8650 (JP)
(74) Representative: Cabinet Beau de Loménie

(56) References cited:
- JP-A- 2017 130 919
- US-A1- 2013 322 088
- US-A1- 2016 088 202

## Description

### TECHNICAL FIELD

This disclosure relates to a camera module that images the interior of a vehicle.

### BACKGROUND DISCUSSION

Camera modules having the above-described configuration are known for instance from documents US 2016/088202 and JP 2017 130919, while document US2013/322088 discloses a large angle LED light source module. As a camera module having the above-described configuration, JP 2010-253987 A (Reference 1) discloses a technology in which a camera module has a structure in which a camera and a light source including an infrared light emitting diode are accommodated in a case, the imaging range of the camera is an area including passengers on a front seat and a rear seat in the interior of a vehicle, and the optical axis of the light source is set to the height of the rear seat which is a remote seat from the camera.

In this Reference 1, by increasing the amount of light received from the light source at the position of the rear seat which is remote from the camera, both the passenger on the front seat and the passenger on the rear seat may be clearly imaged.

As described in Reference 1, it is assumed that a vehicle such as, for example, a passenger car includes a camera which images the interior of the vehicle so as to function as a surveillance camera or which is used to record the occurrence of an accident.

In addition, in this type of camera module, it is also considered to perform face authentication of a driver and a passenger by imaging the faces of the driver on a driver's seat and the passenger on a passenger seat, or to be used for the determination of a state such as, for example, the facial expression or posture of the driver and the passenger during driving.

Here, considering the arrangement of the camera module composed of the camera and the light source, it is reasonable to provide the camera module on or near an instrument panel.

In such an arrangement, there is a positional relationship in which the camera module is relatively close to the driver's seat and the passenger seat, and when a wide angle lens is used in the camera, it is also possible to accommodate and image the faces of the driver on the driver's seat and the passenger on the passenger seat in the same frame.

However, with the provision of the light source having a simple structure in the camera module, since the amount of light is the largest in the vicinity of the optical axis of the light source and the amount of light decreases with increasing distance from the optical axis, the amount of light irradiated to the faces of the driver on the driver's seat and the passenger on the passenger seat is insufficient.

Therefore, although it is conceivable to compensate for the insufficient amount of light by arranging light emitting diodes (LEDs) at multiple positions in the interior of the vehicle, for example, multiple positions in front of the driver's seat and the passenger seat, in such an arrangement, it is also expected that a structure for arranging the light emitting diodes is required, a wire that supplies power to the light emitting diodes is required, and a dedicated power supply circuit is also required, which results in an increase in cost and an increase in the number of elements.

Thus, a need exists for a camera module capable of imaging the faces of a driver on a driver's seat and a passenger on a passenger seat in an appropriate illumination state without causing complexity.

### SUMMARY

A feature of an aspect of this disclosure resides in that a camera module as defined in independent claim 1 which includes an image capturing unit configured to image an interior of a vehicle and an illumination unit configured to illuminate the interior of the vehicle. The illumination unit includes a light source and an illumination lens configured to transmit a light beam from the light source, and the illumination lens sets an irradiation area having an irradiation width in a horizontal direction greater than an irradiation width in a vertical direction by reducing an area to which the light beam of the light source is transmitted in the vertical direction.

With this configuration, by reducing the area to which the light beam is transmitted from the light source in the vertical direction, since it is possible to irradiate the irradiation area with the light beam which has been wastefully transmitted to the upper side and the lower side of the area in which the faces of a driver seated on a driver's seat and a passenger seated on a passenger seat are irradiated with a light beam in the related art, it is possible to increase the amount of light of the entire irradiation area. Therefore, it is also possible to eliminate the shortage of the amount of light in the vicinity of an end portion of an imaging area of the camera in the horizontal direction.

Accordingly, a camera module capable of imaging the faces of the driver on the driver's seat and the passenger on the passenger seat in an appropriate illumination state is configured.

As another configuration, the illumination lens may set the irradiation area so as to create a plurality of high illuminance areas arranged in the horizontal direction.

The area imaged by the camera may be divided into an area that requires a sufficient amount of light like the face of a person and an area that requires no light like a space in which no person is present. For this reason, for example, by setting the face of the driver on the driver's seat and the face of the passenger on the passenger seat to the high illuminance areas, it is possible to reduce the amount of light in the area that does not require illumination and increase the amount of light in the high illuminance area that requires bright illumination. Therefore, it is possible to illuminate the faces of multiple passengers with a required amount of light without increasing the amount of light of the light source.

As another configuration, the illumination lens may set the irradiation area so as to set a uniform illuminance distribution in the horizontal direction.

According to this configuration, it is possible to overcome a problem in that the amount of light at the center of the irradiation area is larger than that of the other area and to perform illumination with the same amount of light in any area of the irradiation area so as to enable imaging in a state where there is no variation in the amount of illumination. By performing such illumination, for example, it is also possible to image the faces of three passengers who sit side by side in the horizontal direction on a rear seat while illuminating the faces with the same amount of light.

As another configuration, the light source may be configured to transmit the light beam along an optical axis, and the illumination lens may set the irradiation area so as to concentrate the light beam transmitted along the optical axis on an area that deviates in the vertical direction from an extension of the optical axis.

For example, assuming a camera module that sets the irradiation area at a position above the center of the imaging area of the camera, it is reasonable to cross the extension of the optical axis of the light source with the center of the irradiation area. However, in a case of the light source such as, for example, an LED, it is necessary to provide a member for setting the attitude of the LED so that the optical axis of the light source is oriented toward the central position of the irradiation area, or to consider the structure of the substrate that supports the LED.

Meanwhile, by configuring the illumination lens so as to transmit and concentrate the light beam from the light source in a direction that deviates in the vertical direction from the extension of the optical axis, it is possible to provide the light source, for example, in an attitude in which the light source may be most easily supported with respect to the substrate without using, for example, a member for setting, for example, the attitude of the LED constituting the light source. This makes it easy to manufacture the camera module.

As another configuration, the light source may be configured to transmit the light beam along the optical axis, and the illumination lens may set the irradiation area so as to concentrate the light beam transmitted along the optical axis on an area that deviates in the horizontal direction from the extension of the optical axis.

For example, considering a configuration in which the irradiation area is set to a position that deviates in the horizontal direction from the center of the imaging area of the camera, it is reasonable to cross the extension of the optical axis of the light source with the central position of the irradiation area. However, in a case of the light source such as, for example, an LED, it is necessary to provide a member for setting the attitude of the LED so that the optical axis of the light source is oriented toward the central position of the irradiation area, or to consider the structure of the substrate that supports the LED.

Meanwhile, by configuring the illumination lens so as to transmit and concentrate the light beam from the light source in a direction that deviates in the horizontal direction from the extension of the optical axis, it is possible to provide the light source, for example, in an attitude in which the light source may be most easily supported with respect to the substrate without using, for example, a member for setting, for example, the attitude of the LED constituting the light source. This makes it easy to manufacture the camera module.

### BRIEF DESCRIPTION OF THE DRAWINGS

The foregoing and additional features and characteristics of this disclosure will become more apparent from the following detailed description considered with the reference to the accompanying drawings, wherein:
Fig. 1 is a plan view illustrating an arrangement of a driver's seat and a passenger seat of a passenger car;
Fig. 2 is a view illustrating an arrangement of an image capturing unit and an illumination unit;
Fig. 3 is an exploded perspective view of the image capturing unit;
Fig. 4 is an exploded perspective view of the illumination unit;
Fig. 5 is a longitudinal cross-sectional view of a region of an illumination lens of the illumination unit;
Fig. 6 is a transverse cross-sectional view of a region of the illumination lens of the illumination unit;
Fig. 7 is a front view of the illumination unit;
Fig. 8 is a view illustrating a positional relationship of high illuminance areas in a captured image in the image capturing unit;
Fig. 9 is a view schematically illustrating an imaging area, a high illuminance area, and a maximum concentration area;
Fig. 10 is a plan view for explaining an imaging area angle of the image capturing unit and an illumination area angle of the illumination unit;
Fig. 11 is a view illustrating an arrangement of the image capturing unit and the illumination unit of another embodiment (b);
Fig. 12 is a transverse cross-sectional view of the illumination lens of another embodiment (c);
Fig. 13 is a transverse cross-sectional view of the illumination lens of another embodiment (d); and
Fig. 14 is a transverse cross-sectional view of the illumination lens of another embodiment (e).

### DETAILED DESCRIPTION

Hereinafter, embodiments disclosed here will be described with reference to the accompanying drawings.

### <Basic Configuration>

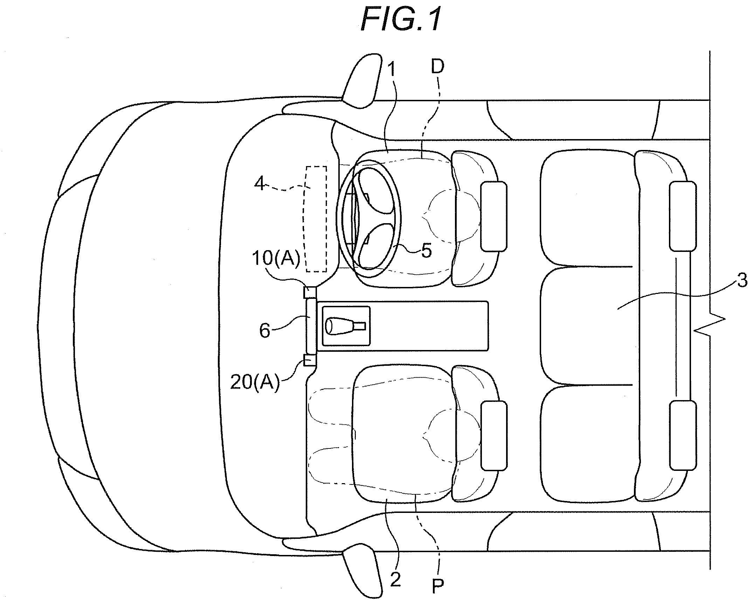

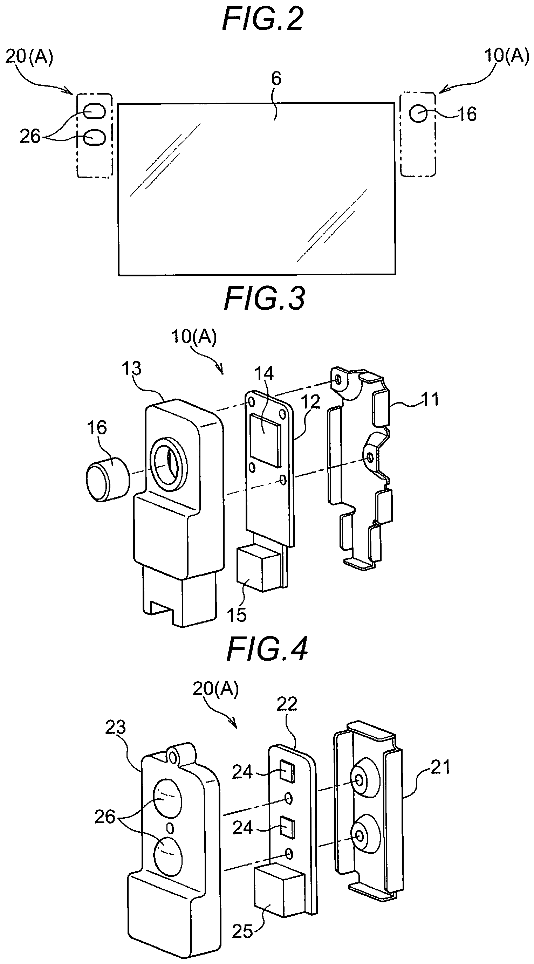

As illustrated in Figs. 1 and 2, a camera module A is configured by including an image capturing unit 10 which images the interior of a passenger car as a vehicle and an illumination unit 20 which illuminates the interior of the vehicle. The camera module A irradiates infrared light from the illumination unit 20 and performs imaging in the image capturing unit 10 under the irradiation of infrared light.

The camera module A is used to perform authentication of a driver D and a passenger P on a passenger seat 2 by imaging, for example, the face or the physique of the driver D seated on a driver's seat 1 and the passenger P seated on the passenger seat 2, or to perform determination of a case where the driver D enters an abnormal driving state such as, for example, inattentiveness, abstractedness, sleepiness, sickness, or death from the expression or the posture of the driver D during driving.

In addition, face authentication realizes identification of a person by a known image processing for face authentication. In addition, the camera module A performs, for example, sleepiness determination by determining, for example, a shift to a sleepy state by a known image processing based on, for example, the state of the eyelids and the direction of the line of sight, and based on this determination, controls the vehicle by another system or issues a notification by sound or vibration. In addition, the camera module A may also be used as an imaging device for recording the situation of the interior of the vehicle, for example, when a fender-bender occurs.

As illustrated in Fig. 1, the interior of a passenger car is provided with the driver's seat 1 on the right side with respect to a heading direction, the passenger seat 2 on the left side, and a rear seat 3. An instrument panel 4 and a steering wheel 5 are arranged in front of the driver's seat 1, and a room mirror (not illustrated) is provided above thereof. A display 6 of a navigation system using a GPS satellite is provided in the vicinity of the instrument panel 4, and as illustrated in Fig. 2, the image capturing unit 10 is disposed at the right side of the display 6 and the illumination unit 20 is disposed at the left side of the display 6.

In addition, the arrangement of the image capturing unit 10 and the illumination unit 20 constituting the camera module A is not limited to that illustrated in Figs. 1 and 2, and, for example, the image capturing unit 10 and the illumination unit 20 may be arranged in the vicinity of the room mirror.

### <Imaging Area and Irradiation Area>

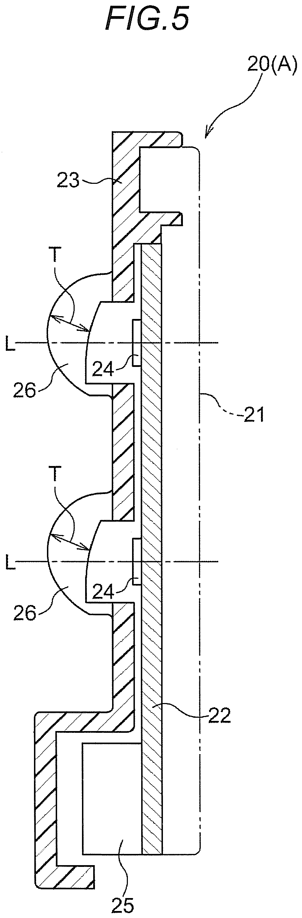

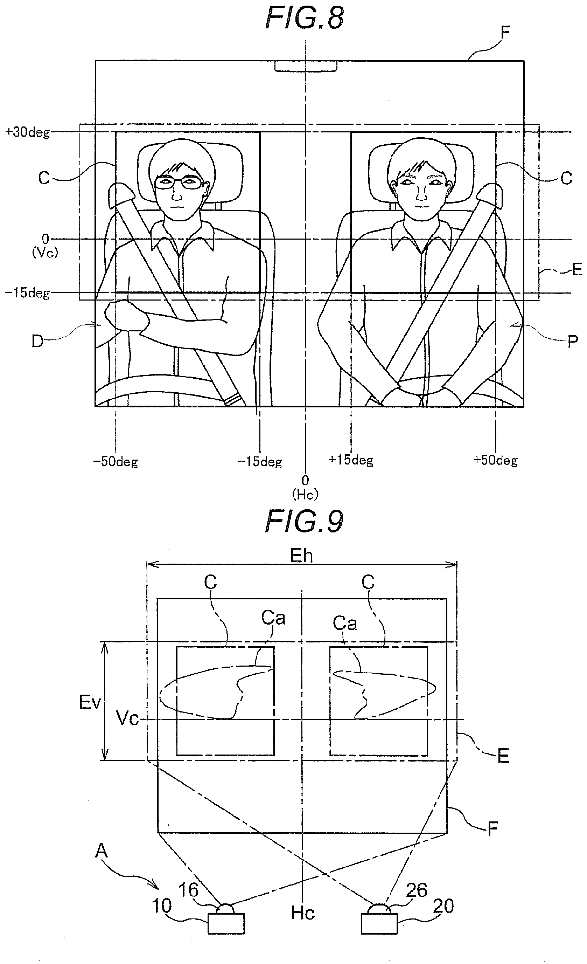

As illustrated in Figs. 8 and 9, an imaging area F of a captured image imaged by the image capturing unit 10 is set, and an irradiation area E by the illumination unit 20 is set. As illustrated in Fig. 8, in the imaging area F, the face of the driver D and the face of the passenger P have a positional relationship in which they are spaced apart from a horizontal center Hc in the transverse axis direction and a vertical center Vc in the longitudinal axis direction. In addition, the horizontal center Hc is located on the extension of an optical axis L of a light source 24 (see Fig. 5).

In order to illuminate the face of the driver D and the face of the passenger P with a sufficient amount of light, the illumination unit 20 is configured to set the irradiation area E at a position that is higher than the center in the vertical direction (the vertical center Vc) by a set amount and to create a pair of high illuminance areas C in the irradiation area E. In addition, a maximum concentration area Ca having a higher illuminance than the average amount of light in the high illuminance area C is created in a portion of the high illuminance area C.

In other words, the irradiation area E is set to be smaller than the imaging area F in order to illuminate the face of the driver D and the face of the passenger P with a sufficient amount of light rather than illuminating the entire imaging area F. In particular, in order to create the pair of high illuminance areas C that correspond to the face of the driver D and the face of the passenger P and the maximum concentration areas Ca, the illumination unit 20 is configured to concentrate a required amount of infrared light on the aforementioned areas and to reduce the amount of light in an area not included in the high illuminance areas C. In addition, the high illuminance area C is illustrated as a rectangular area in Figs. 8 and 9, but is an area having a shape approximating a rectangle in reality.

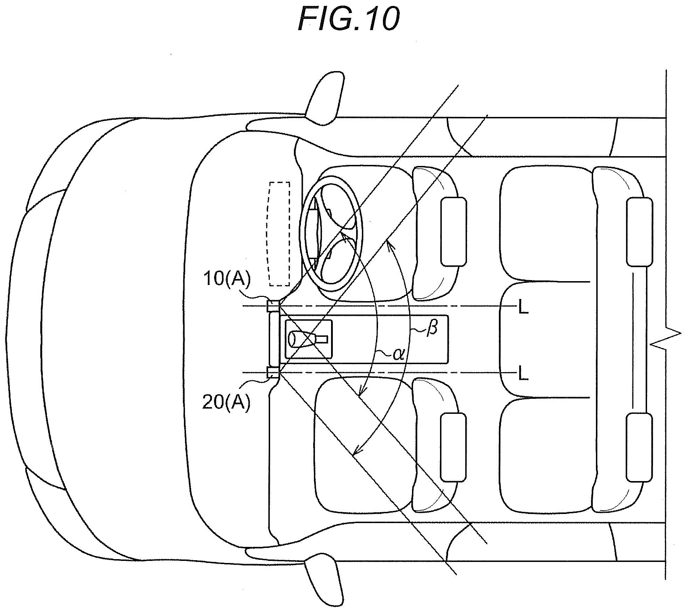

As illustrated in Fig. 10, the camera module A is configured such that the imaging area F by the image capturing unit 10 has an imaging area angle α and the irradiation range of a light beam by the illumination unit 20 has an illumination area angle β. The imaging area angle α is set to a value that exceeds 100 deg (°), and similarly, the illumination area angle β is also set to a value that exceeds 100 deg (°).

As illustrated in Fig. 8, one of the pair of high illuminance areas C, which corresponds to the driver D, is within the range of -15 deg to -50 deg under the assumption that the horizontal center Hc in the transverse axis direction is 0 deg, and is within the range of -15 deg to +30 deg under the assumption that the vertical center Vc in the longitudinal axis direction is 0 deg. In addition, the other one of the pair of high illuminance areas C, which corresponds to the passenger P, is within the range of + 15 deg to +50 deg in the transverse axis direction, and is within the range of -15 deg to +30 deg in the longitudinal axis direction. In addition, these ranges are appropriately changed according to the mounting position of the camera module A.

### <The camera module>

As illustrated in Fig. 3, the image capturing unit 10 includes a camera frame 11, an imaging substrate 12, and an imaging case 13. An imaging element 14 such as, for example, a CCD or a CMOS and an image connector unit 15 are provided on the imaging substrate 12, and a wide angle lens 16 is provided in the imaging case 13. In addition, the imaging element 14 having high sensitivity with respect to the wavelength range of infrared light that is longer in wavelength than visible light is used.

As illustrated in Fig. 4, the illumination unit 20 includes an illumination frame 21, an illumination substrate 22, and an illumination case 23. A pair of light sources 24 formed of LED chips that emit infrared light and a power connector 25 are provided on the illumination substrate 22, and a pair of illumination lenses 26 are integrally formed in the illumination case 23.

In addition, the illumination case 23 and the illumination lens 26 are integrally formed by forming a transparent resin using a mold, and the illumination case 23 is formed with the pair of illumination lenses 26 which are vertically arranged. In addition, in the camera module A, the number of light sources 24 of the illumination unit 20 may be one, or may be three or more according to the number of high illuminance areas C. Thus, the number of illumination lenses 26 formed in the illumination case 23 corresponds to the number of light sources 24.

The illumination unit 20 is disposed such that the illumination substrate 22 and the outer wall surface of the illumination case 23 on which the illumination lens 26 is formed have a vertical attitude illustrated in Fig. 5. Since the light source 24 formed of an LED chip is supported on the illumination substrate 22 in an attitude in which the light source 24 is parallel to the substrate surface of the illumination substrate 22, a light beam from the light source 24 is transmitted along the optical axis L having an attitude in which the optical axis L is orthogonal to the substrate surface (having an attitude in which the substrate surface coincides with the light source surface). In this embodiment, the optical axis L is set to a horizontal attitude.

Since the pair of illumination lenses 26 have the same cross-sectional shape and since the entire illumination lens 26 functions as a convex lens as illustrated in the longitudinal cross-sectional view of Fig. 5, spread of the light beam in the vertical direction is suppressed in an area within a predetermined distance from the illumination lens 26. In addition, since a maximum thickness portion T of the illumination lens 26 is disposed above the optical axis L in the longitudinal cross-sectional view, the light beams directed from the pair of light sources 24 toward the illumination lenses 26 along the optical axis L are transmitted upward in the vertical direction from the extension of the optical axis L by refraction when passing through the illumination lenses 26, thereby being concentrated on the irradiation area E.

In other words, the illumination lens 26 determines a vertical irradiation width Ev of the irradiation area E by concentrating the light beam transmitted from the light source 24 along the optical axis L on the area which deviates upward in the vertical direction from the extension of the optical axis L so as to suppress spread of the light beam in the vertical direction.

Therefore, as illustrated in Fig. 9, the vertical irradiation width Ev includes the vertical center Vc, but is disposed at a position deviated to the higher side than the vertical center Vc as a whole. In this embodiment, although the vertical irradiation width Ev of the irradiation area E deviates to the higher side than the vertical center Vc as a whole, for example, when the high illuminance area C is displaced to a position lower than the vertical center Vc, the vertical irradiation width Ev of the irradiation area E may be disposed at a position that is lower than the vertical center Vc as a whole. In this case, the light beam transmitted from the light source 24 along the optical axis L is transmitted downward in the vertical direction from the extension of the optical axis L by refraction when passing through the illumination lens 26.

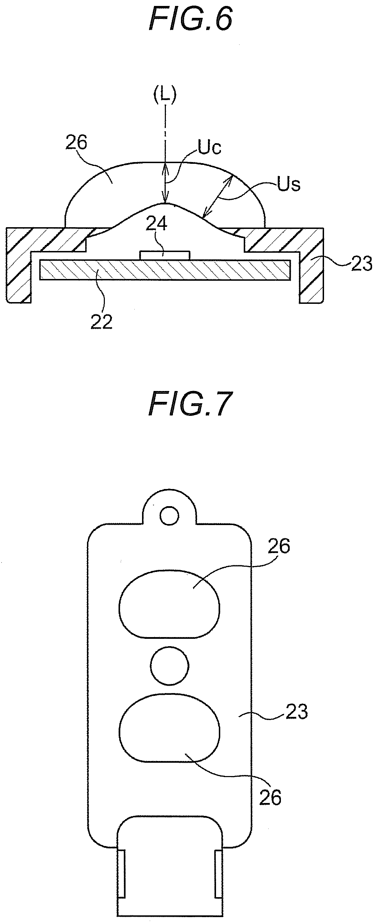

As illustrated in the transverse cross-sectional view of Fig. 6, the center position of the illumination lens 26 functions as a concave lens and the lateral position thereof functions as a convex lens. That is, a central lens thickness Uc at the center position is smaller than a lens thickness in a portion closer to the lateral side, and a lateral lens thickness Us at a position that is displaced laterally from the center position by a predetermined amount is larger than a lens thickness in a portion closer to the center.

Therefore, the light beam which is transmitted from the light source 24 along the optical axis L to pass through the center portion of the illumination lens 26 spreads outward in the portion that functions as a concave lens, and as a result, the amount of light is reduced in the area close to the optical axis L. In addition, the light beam that passes through either lateral portion of the illumination lens 26 may be concentrated on the area within a predetermined distance from the illumination lens 26.

In other words, the illumination lens 26 determines a horizontal irradiation width Eh of the irradiation region E by concentrating the light beam transmitted along the optical axis L from the light source 24 on the area of the illumination lens 26 which deviates in the horizontal direction from the extension of the optical axis L.

With this principle, the light beam directed from the light source 24 toward the lateral portion of the illumination lens 26 is refracted so as to be concentrated when passing through the portion of the illumination lens 26 which functions as a convex lens. Thus, the light beam which is originally transmitted outward of the horizontal irradiation width Eh is transmitted to the horizontal irradiation width Eh, and concentration of the light beam on the high illuminance area C which is spaced apart from the optical axis L is realized.

Accordingly, by setting the shape of the illumination lens 26, the vertical irradiation width Ev and the horizontal irradiation width Eh of the irradiation area E are determined so as to enable the light beam to be focused on the high illuminance area C at a position spaced apart from the irradiation area E in the horizontal direction. In addition, the horizontal irradiation width Eh is set to be sufficiently larger than the vertical irradiation width Ev and slightly larger than the horizontal range of the imaging area F.

In particular, by setting the shape of the illumination lens 26, as illustrated in Fig. 9, the maximum concentration area Ca on which the light beam is focused so as to exert an illuminance higher than the average amount of light of the high illuminance area C is created in a portion of the high illuminance area C.

### <Action effects of Embodiment>

By configuring the camera module A as described above, the illumination unit 20 eliminates a phenomenon in which the amount of light increases at a position closer to the optical axis L of the light source 24 and focuses the light beam from the light source 24 on two high illuminance areas C including the face of the driver D seated on the driver's seat 1 and the face of the passenger P seated on the passenger seat 2, thereby realizing imaging in a state where the faces of the driver D and the passenger P are illuminated with a sufficient amount of light. In addition, this configuration eliminates the shortage of the amount of light in an image captured by the image capturing unit 10 without increasing power supplied to the light source 24 or increasing the number of light sources 24.

By setting the vertical irradiation width Ev of the irradiation area E to be smaller than the horizontal irradiation width Eh, the camera module A prevents the light beam from being unnecessarily irradiated to an area that deviates in the vertical direction from the high illuminance area C, thereby eliminating unnecessary irradiation of the light beam and preventing an increase in the number of light sources 24.

The wide angle lens 16 used in the image capturing unit 10 causes the periphery of the captured image to be darker than the center of the captured image (due to the shortage of the amount of light). This is called "peripheral attenuation", and causes the shortage of the amount of light of the light beam that illuminates the face of the driver D and the face of the passenger P near the periphery of the image captured by the image capturing unit 10 as in the embodiment.

Meanwhile, when the illumination unit 20 concentrates the light beam on two high illuminance areas C, it is possible to sufficiently compensate for the shortage of the amount of light due to the optical characteristics of the wide angle lens 16.

As illustrated in Fig. 5, by setting the cross-sectional shape of the illumination lens 26, the light beam transmitted from the light source 24 along the optical axis L is concentrated on the irradiation area E that is at the position deviated upward from the extension of the optical axis L by refraction in the illumination lens 26, and is also concentrated on two high illuminance areas C which deviate in the horizontal direction from the extension of the optical axis L. Therefore, for example, it is unnecessary to support the illumination unit 20 in an inclined attitude so that the optical axis L of the light source 24 is oriented in a light concentration direction.

For example, considering a scheme of increasing the value of current supplied to the light source 24 in order to illuminate the faces of the driver D and the passenger P with a sufficient amount of light, heat generation also increases as the current value increases. Meanwhile, by setting the illumination lens 26 of the illumination unit 20 as in the embodiment, it is possible to suppress an increase in the value of current supplied to the light source 24, thereby preventing heat generation and reducing power consumption.

In this embodiment, by disposing the image capturing unit 10 at a position closer to the driver's seat 1 than the illumination unit 20, it is possible to more clearly image the face of the driver D seated on the driver's seat 1 than the face of the passenger P seated on the passenger seat 2.

### <Other Embodiments>

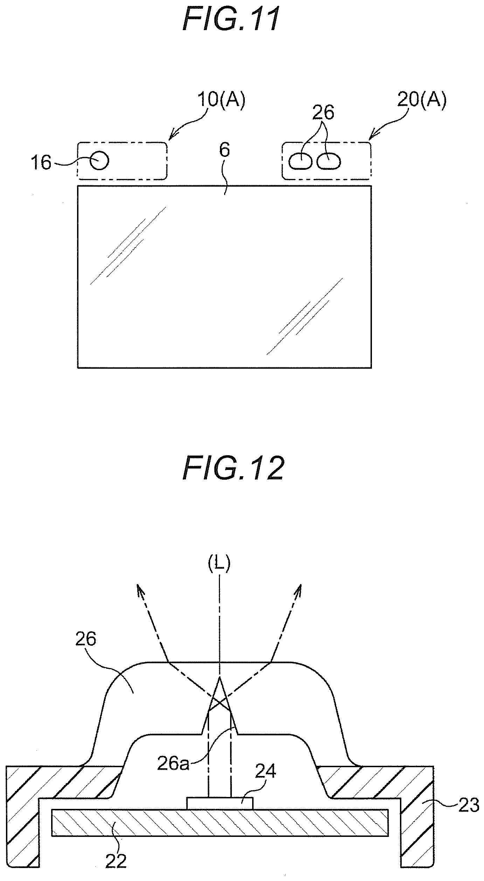

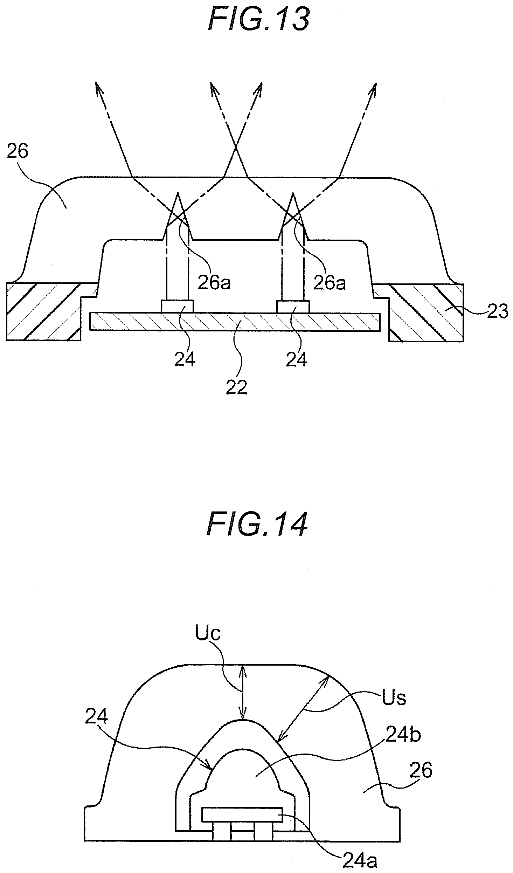

This disclosure may be configured in the following manner besides the above-described embodiment (the elements having the same functions as those in the embodiment will be denoted by the same reference numerals as those in the embodiment).
(a) The cross-sectional shape of the illumination lens 26 is set so as to set a uniform illuminance distribution in the horizontal direction in the irradiation area E. Therefore, for example, even when three passengers P who sit side by side in the horizontal direction on the rear seat 3 are imaging targets, imaging is also possible in a state where the faces of the three passengers P on the rear seat 3 are illuminated with the same amount of light. In addition, when the driver D seated on the driver's seat 1 and the passenger P seated on the passenger seat 2 are set to imaging targets as in the embodiment, there occurs no shortage of the amount of light even if positions of the driver D on the driver's seat 1 and the passenger P on the passenger seat 2 slightly move in the horizontal direction.
   As described in the embodiment, in the camera module A, the number of light sources 24 of the illumination unit 20 may be one, or may be three or more. In this alternative embodiment (a), since the number of illumination lenses 26 corresponding to the number of light sources 24 is provided, a further uniform illuminance distribution is realized in the irradiation area E.
(b) As illustrated in Fig. 11, the image capturing unit 10 and the illumination unit 20 are provided so as to be parallel to each other above (or below) the display 6 of the navigation system.
   In a configuration of this alternative embodiment (b), since the illumination unit 20 is disposed in a horizontally elongated attitude, the attitude of the illumination lens 26 when viewed in the direction orthogonal to the outer wall surface of the illumination case 23 is the attitude in which the illumination lens 26 is rotated by 90 degrees around the optical axis L as compared with the attitude of the illumination lens 26 illustrated in the embodiment.
(c) The illumination lens 26 is configured so as to have a transverse cross section illustrated in Fig. 12. In the illumination lens 26 of this alternative embodiment (c), a groove 26a is formed at a position at which the groove 26a overlaps the optical axis L along which the light beam is transmitted from the light source 24. By setting the cross-sectional shape of the illumination lens 26 in this manner, it is possible to allow a portion in which the groove 26a is provided to function as a concave lens and to reflect the light beam from the light source 24 by the inner surface of the groove 26a so as to transmit the light beam in the direction indicated by the arrow in Fig. 12 (the direction away from the optical axis L). In addition, the groove 26a is formed in an attitude in which the groove 26a extends in the vertical direction in the inner surface of the illumination lens 26.
   Therefore, it is possible to irradiate a sufficient amount of light beam to the high illuminance area C without causing the shortage of the amount of light in the periphery of the horizontal irradiation width Eh of the irradiation area E.
(d) As illustrated in Fig. 13, in a modification of this alternative embodiment (c), a plurality of (in the drawing, a pair of) light sources 24 are provided on the illumination substrate 22, and a plurality of (in the drawing, a pair of) grooves 26a are formed in the illumination lens 26. In this configuration, similarly, by reflecting the light beam from the light source 24 by the inner surface of the groove 26a, it is possible to transmit the light beam in the direction indicated by the arrow in Fig. 13 (the direction away from the optical axis L). In addition, the groove 26a is formed in an attitude in which the groove 26a extends in the vertical direction in the inner surface of the illumination lens 26.
   Therefore, since it is unnecessary to provide one illumination lens 26 for one light source 24, it is possible to reduce the number of illumination lenses 26 and to transmit a sufficient amount of light beam to the high illuminance area C without causing the shortage of the amount of light in the periphery of the horizontal irradiation width Eh of the irradiation area E.
(e) As illustrated in Fig. 14, in the light source 24, an LED-type light emitting element 24a is enclosed in a protection body 24b formed of a transparent resin, and the protection body 24b is accommodated in the illumination lens 26 formed of a transparent resin. In addition, by forming the illumination lens 26 in the same shape as the illumination lens 26 of the embodiment, it is possible to form the irradiation area E as in the embodiment and to set a positional relationship between the light source 24 and the illumination lens 26 with a high precision.
   In this alternative embodiment (e), the central lens thickness Uc of the illumination lens 26 is set, and the lateral lens thickness Us in the horizontal direction is set to be larger than the central lens thickness. Therefore, it is unnecessary to form the illumination lens 26 in the illumination case 23. In addition, in a configuration of this alternative embodiment (e), even when the illumination lens 26 is formed in the illumination case 23, it is possible to reduce the lens thickness.
(f) The image capturing unit 10 and the illumination unit 20 are configured as a single unit. By configuring as a single unit, it is possible to align the position of the imaging area F of the image capturing unit 10 with the position of the irradiation area E in the state of the unit, and thus, adjustment after mounting in the interior of the vehicle becomes unnecessary.
(g) The camera module A is provided at the upper end position of a pillar at the lateral position of the vehicle. In the camera module A, since the irradiation area E of the light beam in the illumination unit 20 may be set to be long in the horizontal direction, it is also possible to image, for example, the face of the passenger P seated on the rear seat 3 with a sufficient amount of light. In addition, the arrangement of the camera module A is not limited to the front region of the interior of the vehicle as in the embodiment or the sidewall portion of the upper region of the interior of the vehicle as in the alternative embodiment (g), but may be disposed at any other position.

This disclosure may be used in a camera module that images the interior of a vehicle.

The principles, preferred embodiment and mode of operation of the present invention have been described in the foregoing specification. However, the invention which is intended to be protected is not to be construed as limited to the particular embodiments disclosed. Further, the embodiments described herein are to be regarded as illustrative rather than restrictive. Variations and changes may be made without departing from the scope of the present invention as defined in the claims.

## Claims

1. A camera module (A) comprising:
an image capturing unit (10) configured to image an interior of a vehicle; and
an illumination unit (20) configured to illuminate the interior of the vehicle,
wherein the illumination unit includes at least one light source (24) and an illumination lens (26) configured to transmit light beam(s) from said at least one light source, and
the illumination lens (26) is such that an irradiation area (E) has an irradiation width (Eh) in a horizontal direction greater than an irradiation width (Ev) in a vertical direction with an area to which the light beam of the light source is transmitted in the vertical direction being reduced, and that
the irradiation area (E) comprises a plurality of high illuminance areas (C) arranged in the horizontal direction.

2. The camera module according to claim 1,
wherein said at least one light source (24) is configured to transmit the light beam along an optical axis (L), and
the illumination lens (26) sets the irradiation area (E) so as to concentrate the light beam transmitted along the optical axis on an area that deviates in the vertical direction from an extension of the optical axis.

3. The camera module according to claim 1 or 2,
wherein said at least one light source (24) is configured to transmit the light beam along an optical axis (L), and
the illumination lens (26) sets the irradiation area (E) so as to concentrate the light beam transmitted along the optical axis on an area that deviates in the horizontal direction from the extension of the optical axis.

4. The camera module according to any one of claims 1 to 3, wherein high illuminance areas are set to a face of a driver on a driver's seat and to a face of a passenger on a passenger seat.

5. The camera module according to any one of claims 1 to 4, wherein a central lens thickness (Uc) at a center position of the illumination lens (26) is smaller than a lens thickness in a portion closer to a lateral side of the illumination lens (26), and a lateral lens thickness (Us) at a position that is displaced laterally from the center position by a predetermined amount is larger than a lens thickness in a portion closer to the center of the illumination lens (26).

## Patentansprüche

1. Kameramodul (A), das umfasst:
eine Bildaufnahmeeinheit (10), die dazu konfiguriert ist, den Innenraum eines Fahrzeugs abzubilden, und
eine Beleuchtungseinheit (20), die dazu konfiguriert ist, den Innenraum des Fahrzeugs zu beleuchten,
wobei die Beleuchtungseinheit wenigstens eine Lichtquelle (24) und eine Beleuchtungslinse (26) umfasst, die dazu konfiguriert ist, einen oder mehrere Lichtstrahlen von der wenigstens einen Lichtquelle durchzulassen, und
die Beleuchtungslinse (26) so ausgelegt ist, dass ein Bestrahlungsbereich (E) eine Bestrahlungsbreite (Eh) in einer horizontalen Richtung aufweist, die größer ist als eine Bestrahlungsbreite (Ev) in einer vertikalen Richtung, wobei ein Bereich, auf den der Lichtstrahl der Lichtquelle in der vertikalen Richtung durchgelassen wird, reduziert ist, und wobei
die Bestrahlungsfläche (E) mehrere Bereiche (C) von hoher Beleuchtungsstärke umfasst, die in der horizontalen Richtung angeordnet sind.

2. Kameramodul nach Anspruch 1,
wobei die wenigstens eine Lichtquelle (24) dazu konfiguriert ist, den Lichtstrahl entlang einer optischen Achse (L) durchzulassen, und
die Beleuchtungslinse (26) die Bestrahlungsfläche (E) so einstellt, dass der entlang der optischen Achse durchgelassene Lichtstrahl auf eine Fläche konzentriert wird, die in der vertikalen Richtung von einer Verlängerung der optischen Achse abweicht.

3. Kameramodul nach Anspruch 1 oder 2,
wobei die mindestens eine Lichtquelle (24) dazu konfiguriert ist, den Lichtstrahl entlang einer optischen Achse (L) durchzulassen, und
die Beleuchtungslinse (26) die Bestrahlungsfläche (E) so einstellt, dass der entlang der optischen Achse durchgelassene Lichtstrahl auf eine Fläche konzentriert wird, die in der horizontalen Richtung von einer Verlängerung der optischen Achse abweicht.

4. Kameramodul nach einem der Ansprüche 1 bis 3, wobei Bereiche mit hoher Beleuchtungsstärke auf das Gesicht eines Fahrers auf einem Fahrersitz und auf das Gesicht eines Beifahrers auf dem Beifahrersitz eingestellt werden.

5. Kameramodul nach einem der Ansprüche 1 bis 4, wobei eine mittige Linsendicke (Uc) an einer mittleren Position der Beleuchtungslinse (26) kleiner ist als eine Linsendicke in einem Abschnitt, der näher an einer lateralen Seite der Beleuchtungslinse (26) liegt, und eine laterale Linsendicke (Us) an einer Position, die seitlich von der mittleren Position um einen vorgegebenen Betrag versetzt ist, größer ist als eine Linsendicke in einem Abschnitt, der näher an der Mitte der Beleuchtungslinse (26) liegt.

## Revendications

1. Module de caméra (A) comprenant :
une unité de capture d'image (10) configurée pour prendre une image d'un intérieur d'un véhicule ; et
une unité d'illumination (20) configurée pour illuminer l'intérieur du véhicule,
l'unité d'illumination comprenant au moins une source de lumière (24) et une lentille d'illumination (26) configurée pour transmettre un ou des faisceaux de lumière depuis ladite au moins une source de lumière, et
la lentille d'illumination (26) étant telle qu'une zone d'irradiation (E) a une largeur d'irradiation (Eh) dans une direction horizontale plus grande qu'une largeur d'irradiation (Ev) dans une direction verticale avec une zone vers laquelle le faisceau de lumière de la source de lumière est transmis dans la direction verticale qui est réduite, et
la zone d'irradiation (E) comprenant une pluralité de zones de forte illumination (C) disposées dans la direction horizontale.

2. Module de caméra selon la revendication 1,
dans lequel ladite au moins une source de lumière (24) est configurée pour transmettre le faisceau de lumière le long d'un axe optique (L), et
la lentille d'illumination (26) établit la zone d'irradiation (E) de façon à concentrer le faisceau de lumière transmis le long de l'axe optique sur une zone qui s'écarte dans la direction verticale par rapport à une extension de l'axe optique.

3. Module de caméra selon la revendication 1 ou 2,
dans lequel ladite au moins une source de lumière (24) est configurée pour transmettre le faisceau de lumière le long d'un axe optique (L), et
la lentille d'illumination (26) établit la zone d'irradiation (E) de façon à concentrer le faisceau de lumière transmis le long de l'axe optique sur une zone qui s'écarte dans la direction horizontale par rapport à l'extension de l'axe optique.

4. Module de caméra selon l'une quelconque des revendications 1 à 3, dans lequel des zones de forte illumination sont prévues vers un visage d'un conducteur sur un siège de conducteur et vers un visage d'un passager sur un siège de passager.

5. Module de caméra selon l'une quelconque des revendications 1 à 4, dans lequel une épaisseur de lentille centrale (Uc) dans une position centrale de la lentille d'illumination (26) est plus petite qu'une épaisseur de lentille dans une partie plus près d'un côté transversal de la lentille d'illumination (26), et une épaisseur de lentille transversale (Us) dans une position qui est déplacée latéralement par rapport à la position centrale d'une quantité prédéterminée est plus grande qu'une épaisseur de lentille dans une partie plus près du centre de la lentille d'illumination (26).
